# NEUE EUROPÄISCHE PATENTSCHRIFT

(11) **EP 0 214 377 B2**
(45) Veröffentlichungstag und Bekanntmachung des Hinweises auf die Entscheidung über den Einspruch: **12.01.1994**
(45) Hinweis auf die Patenterteilung: 10.01.1990
(21) Anmeldenummer: 86108079.4
(22) Anmeldetag: 13.06.1986
(51) Int. Cl.: F16J 15/12

(54) **Flachdichtung, insbesondere Zylinderkopfdichtung für Verbrennungskraftmaschinen**
Gasket, in particular a cylinder head gasket for internal-combustion engines
Joint d'étanchéité plat, notamment joint de culasse pour moteur à combustion interne

(30) Priorität: 09.08.1985 DE 3528614
(43) Veröffentlichungstag der Anmeldung: 18.03.1987
(73) Patentinhaber: GOETZE AG, D-51399 Burscheid (DE)
(72) Erfinder: Beyer, Horst, Dr., D-5093 Burscheid (DE); Maus, Karl-Heinz, Dipl.-Ing., D-5600 Wuppertal 11 (DE); Lachnit, Detlev, Dipl.-Ing., D-5090 Leverkusen 3 (DE); Lönne, Klaus, Dipl.-Ing., D-5093 Burscheid (DE); Majewski, Klaus-Peter, Dipl.-Ing., D-5093 Burscheid (DE); Zerfass, Hans-Rainer, Dr., D-5093 Burscheid (DE)

(56) Entgegenhaltungen:
- EP-A- 0 041 906
- EP-A- 0 139 432
- DE-A- 49 345
- DE-A- 2 456 683
- DE-A- 2 604 253
- DE-A- 3 005 792
- DE-A- 3 423 787
- US-A- 3 430 611
- US-A- 3 784 212
- US-A- 4 083 570
- US-A- 4 243 231
- US-A- 4 397 472
- US-A- 4 518 168

## Beschreibung

Die Erfindung betrifft eine Flachdichtung, insbesondere eine Zylinderkopfdichtung für Verbrennungskraftmaschinen mit den Merkmalen gemäß dem Oberbegriff des Anspruchs 1.

Zylinderkopfdichtungen für Verbrennungskraftmaschinen bestehen aus gegebenenfalls metallisch verstärkten Weichstoffplatten oder aus bevorzugt Stahlblechplatten. Insbesondere zum Schutz des Brennraumrandes vor der Einwirkung der heißen Brenngase und zur Erhöhung der Dichtpressung werden die Öffnungsränder mit im Querschnitt etwa U-förmig über die Ränder gebogenen metallischen Einfassungsringen versehen. Nach beispielsweise der EP-A-139 432 besteht eine an den Öffnungen eingefaßte Zylinderkopfdichtung aus einem Metallblech mit beidseitig aufgepreßtem Graphitmaterial. Zur Verbesserung der Abdichtwirkung ist es dabei bekannt, am Öffnungsrand in den von den Einfassungen umschlossenen Bereich beispielsweise Metallblechringe mit rundem bis rechteckigem Querschnitt oder elastisch federnde Schraubenfederringe einzulegen. Ebenso sind meist metallische Vorlageringe an den Öffnungsrändern vorbekannt.

Nach der US-PS 4 397 472 ist eine metallisch verstärkte Weichstoffzylinderkopfdichtung vorbekannt, deren Metallplatte am Öffnungsrand radial nach innen vorsteht und dort unter Bildung einer ringförmigen Sicke verformt ist. Der von der Sicke gebildete Hohlraum ist mit Graphit gefüllt und von einer metallischen Einfassung umgeben, so daß durch die Graphitfüllung das gesickte Metallblech gegenüber der Einfassung abgedichtet ist.

Nach der DE-A-3 423 787 ist es auch bekannt, an den Brennraumöffnungen auf den Dichtflächen der Zylinderkopfdichtungen vor allem zur Verbesserung des Abdichtverhaltens Graphitfolien so anzuordnen, daß die im Querschnitt U-förmig über die Öffnungsränder gebogenen Einfassungen die Graphitfolien umhüllen und im Bereich zwischen benachbarten Brennraumöffnungen eine Graphitfolie aufliegt.

Nach der US-A 4 243 231 ist an der Dichtungsplatte zwischen zwei benachbarten Brennraumöffnungen ein kristallines Graphitmaterial angeordnet, das vor allem das Abdichtverhalten zwischen den Öffnungen wesentlich verbessert.

Wesentliche Voraussetzung für ein optimales Abdichtverhalten am Brennraumrand sind ein hohes Rückfederungsverhalten und ein geringes Warmsetzen am Brennraumrand. Durch die Belastungen im motorischen Betrieb kommt es jedoch am gesamten Öffnungsrand zu einer Dauerschwingbelastung infolge der axial stark hin- und herschwingenden Zylinderlaufbüchse. Im Brennraumbereich auf der Dichtungsoberfläche aufliegende dünne Graphitfolien verändern die technologischen Eigenschaften der Dichtung in diesen Bereichen ebenfalls unwesentlich. Bei in die Einfassungen eingelegten Schraubenfederringen und auch bei einliegenden oder vorgelegten Metallringen kommt es bei zusätzlich starker Temperaturbelastung zum Nachlassen des Rückfederungsverhaltens, und es kommt zum gegebenenfalls über den Umfang ungleichmäßig verteilten starken Warmsetzen am Öffnungsrand, so daß schließlich Leckagen an der Dichtung entstehen.

Der vorliegenden Erfindung liegt daher die Aufgabe zugrunde, eine Flachdichtung, wie insbesondere eine Zylinderkopfdichtung für Verbrennungskraftmaschinen, zu schaffen, welche mit einfachen und kostensparenden Maßnahmen vor einem Undichtwerden am Brennraumrand bei Dauerbelastung im motorischen Betrieb optimal geschützt ist.

Erfindungsgemäß wird diese Aufgabe durch eine Flachdichtung gemäß Oberbegriff des Hauptpatentanspruches mit den kennzeichnenden Merkmalen des Hauptanspruchs gelöst, bei der sich eine Graphitfülling radial innerhalb der Flachdichtung unterhalb der Einfassung befindet, die beim Anbringen der Einfassung eingefüllt wird. Das Graphit besteht bevorzugt aus expandiertem Graphit in Pulver-, Flokken- oder Faserform, es kann gegebenenfalls zur Erhöhung der Festigkeit dem Graphit ein Bindemittel zugegeben sein, und/oder der Graphit kann bis zu 50 Gewichtsprozent kurzer Metallfasern, organischer Synthesefasern, anorganischer Fasern und/oder Sintermetallpulver enthalten.

Durch die erfindungsgemäße Füllung des von den Einfassungen umschlossenen Bereiches am Öffnungsrand mit Graphitmaterial werden die optimale Temperaturbeständigkeit und die gute Wärmeleitfähigkeit des Graphits gezielt eingesetzt, um eine optimale und dauerhafte Abdichtwirkung am Öffnungsrand zu erhalten. Da die Graphitfüllung von der Einfassung und dem Dichtungsrand völlig eingeschlossen ist, erfolgt beim Einbau unter dem Dichtpressungsdruck nur eine elastische Verformung der Graphitfüllung mit einem entsprechend der Natur des Graphits hohen Rückfederungsverhalten und damit guter Abdichtwirkung. Die hohe Temperaturbeständigkeit des Graphits verhindert ein starkes Warmsetzen der Füllung bei steigenden Temperaturen, so daß die Dichtung am eingefaßten Öffnungsrand auch im Dauerbetrieb bei erhöhten Temperaturen hervorragend abdichtet.

Im einfachsten Anwendungsfall ist der von der Einfassung am Öffnungsrand gebildete freie Raum mit der Graphitmasse völlig ausgefüllt, so daß Einfassung und Dichtungsrand den gebildeten Raum abkapseln. Zur Verbesserung der abkapselnden Wirkung kann jedoch zwischen Brennraumrand und Graphitfüllung ein zusätzlicher Metallring mit einer maximalen Höhe entsprechend der Dichtungsdicke eingesetzt sein. Dieser Ring kann einen rechteckigen oder dreieckigen Querschnitt besitzen, bevorzugt aber besitzt er einen L-förmigen oder U-förmigen Querschnitt mit zur Graphitfüllung offenem Profil.

Durch die Erfindung ist somit eine Flachdichtung geschaffen, welche am Öffnungsrand eine optimale Dichtwirkung besitzt. Auch im Dauerbetrieb bei hoher mechanischer und Temperaturbelastung verliert der eingefaßte Bereich seine Rückfederungskraft und damit seine Abdichtwirkung nicht. Die denkbaren Ausführungsarten sind darüberhinaus einfach und kostensparend herzustellen, während die komplizierten Ausführungsformen naturgemäß aufwendiger und damit teurer herzustellen sind. Diese Ausführungsformen dienen dann zur Einfassung der Brennraumränder von speziellen Zylinderkopfdichtungen mit extrem hoher Belastung.

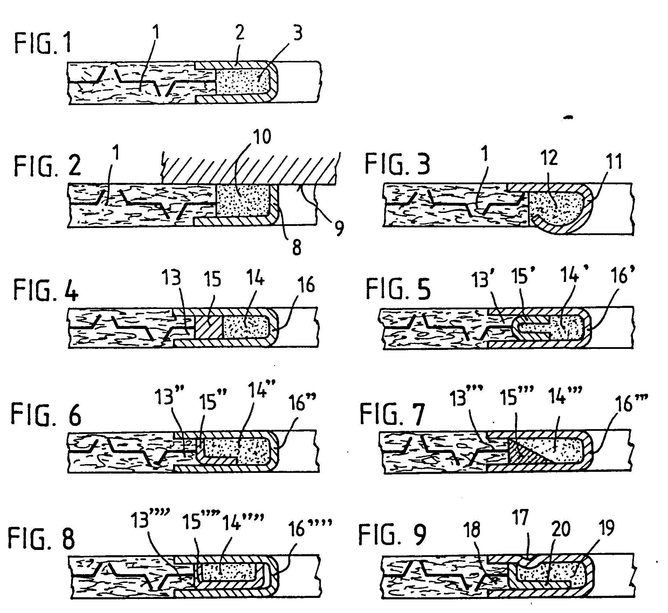

Die Erfindung wird anhand der Abbildungen näher erläutert, die im Querschnitt metallisch eingefaßte Öffnungsränder von Zylinderkopfdichtungen am Brennraumrand zeigen, wobei die Figuren 2 und 8 nicht Gegenstand der Erfindung sind.

In Figur 1 ist 1 die Zylinderkopfdichtungsplatte mit einer im Querschnitt U-förmig über den Öffnungsrand gebogenen metallischen Einfassung 2. Der von der Einfassung 2 gebildete Raum 3 ist mit Graphitmasse gefüllt, die von der Einfassung 2 und vom Öffnungsrand 1 völlig eingekapselt ist.

In Figur 3 ist die Einfassung 11 unter Bildung eines in sich geschlossenen Hohlraumes 12 gebogen, und der Hohlraum 12 ist mit Graphitmasse ausgefüllt.

In den Querschnittsbilden der Figuren 4 bis 7 sind im zwischen Dichtungsrand 13 und Graphit gefüllten Raum 14 Metallringe 15 eingesetzt, so daß die Graphitmasse von der Einfassung 1 6 und dem Metallring 1 5 völlig abgekapselt ist. Die Metallringe 1 5 besitzen dabei einen rechteckigen (Figur 4), einen U-förmigen (Figur 5), einen L-förmigen (Figur 6) oder einen dreieckigen Querschnitt (Figur 7), wobei die axiale Höhe der Ringe etwa gleich der Dicke der Dichtung 13 eines der doppelten Dicke der Einfassungsbleche ist.

In der Figur 9 ist ein Schenkel der Einfassung gesickt 17, wobei zwischen Öffnungsrand 18 und Graphitfüllung 19 ein Metallring 20 mit L-Profil eingesetzt ist.

## Patentansprüche

1. Flachdichtung, insbesondere Zylinderkopfdichtung für Verbrennungskraftmaschinen, mit mindestens einer vorzugsweise metallischen Einfassung (2, 11, 16, 17) insbesondere am Brennraumrand und einer zusätzlichen Graphitfüllung (3, 12, 14, 19), um das Abdichtverhalten im Einfassungsbereich zu verbessern, dadurch gekennzeichnet, daß sich die Graphitfüllung (3, 12, 14, 19) radial innerhalb des Materials der Flachdichtung unterhalb der Brennraumeinfassung (2, 11, 16, 17) befindet, wobei die Graphitmasse in Pulver-, Flocken- oder Faserform in den von der Einfassung (2, 11, 16, 17) und dem Öffnungsrand gebildeten ringförmigen freien Raum so eingefüllt ist, daß sie diesen freien Raum völlig ausfüllt.

2. Flachdichtung, insbesondere Zylinderkopfdichtung für Verbrennungskraftmaschinen, mit mindestens einer vorzugsweise metallischen Einfassung (16, 17) insbesondere am Brennraumrand und einer zusätzlichen Graphitfüllung (14, 19), um das Abdichtverhalten im Einfassungsbereich zu verbessern, dadurch gekennzeichnet, daß zwischen eingefaßter Graphitfüllung (14, 19) und Öffnungsrand (13, 18) zusätzlich ein profilierter Metallring (15, 20) angeordnet ist, der mit seinen Außenumfangsflächen am Öffnungsrand der Dichtung anliegt und daß die Graphitmasse in Pulver-, Flocken- oder Faserform in den von der Einfassung (2, 11, 16, 17) und dem Metallring gebildeten ringförmigen freien Raum so eingefüllt ist, daß sie diesen freien Raum völlig ausfüllt und daß sich die Graphitfüllung (14, 19) radial innerhalb des Materials der Flachdichtung unterhalb der Brennraumeinfassung (16, 17) befindet.

3. Flachdichtung nach Anspruch 1 oder 2, dadurch gekennzeichnet, daß die Graphitfüllung (3, 12, 14, 19) bis zu 50 Gewichtsprozent kurze Metallfaser, Keramikfaser, organische Synthesefaser, Mineralfaser und/oder Sintermetallpulver als Zusatz enthält.

4. Flachdichtung nach Anspruch 2 oder 3, dadurch gekennzeichnet, daß der Metallring (15, 20) ein L-förmiges oder U-förmiges Profil besitzt.

## Claims

1. A flat gasket, especially a cylinder head gasket for internal combustion engines, with at least one preferably metallic edging (2, 11, 16, 17), in particular on the combustion chamber edge, and an additional graphite filling (3, 12, 14, 19) for improving the sealing properties in the edging region, characterized in that the graphite filling (3, 12, 14, 19) is located radially within the material of the flat gasket (1) beneath the combustion chamber edging (2, 11, 16, 17) and the graphite mass in powder, flake or fibre form is filled into the annular free space formed by the edging (2, 11, 16, 17) and the edge of the opening that it fills this free space completely.

2. A flat gasket, especially a cylinder head gasket for internal combustion engines, with at least one preferably metallic edging (16, 17), in particular on the combustion chamber edge, and an additional graphite filling (14, 19) for improving the sealing properties in the edging region, characterized in that a profiled metal ring (15, 20) is additionally arranged between the edged graphite filling (14, 19) and the edge of the opening, bearing with its outer peripheral surface on the edge of the opening of the gasket and in that the graphite mass in powder, flake or fibre form is so filled into the annular free space formed by the edging (2, 11, 16, 17) and the metal ring that it fills this free space completely and in that the graphite filling (14, 19) is located radially within the material of the flat gasket below the combustion chamber edging (16, 17).

3. A flat gasket according to claim 1 or 2, characterized in that the graphite filling (3, 12, 14, 19) contains up to 50 % by weight of short metal fibres, ceramic fibres, organic sythetic fibres, mineral fibres and/or sintered metal powder as additive.

4. A flat gasket according to claim 2 or 3, characterized in that the metal ring (15, 20) has an L-shaped or U-shaped profile.

## Revendications

1. Joint plat, en particulier joint de culasse pour moteur à combustion interne, avec au moins une bordure de préférence métallique (2,11,16,17) en particulier au bord de la chambre de combustion ainsi qu'un remplissage supplémentaire de graphite (3,12,14,19) afin d'améliorer les propriétés d'isolation dans la zone de la bordure, caractérisé en ce que le remplissage de graphite (3,12,14,19) se trouve radialement à l'intérieur du matériau du joint plat en dessous de la bordure (2,11,16,17) de la chambre de combustion dans lequel la masse de graphite est introduite sous forme de poudre, flocons, ou fibres dans l'espace libre annulaire formé par la bordure (2,11,16,17) et le bord de l'ouverture, de facon qu'elle remplisse complètement cet espace libre.

2. Joint plat, en particulier joint de culasse pour moteur à combustion interne, avec au moins une bordure de préférence métallique (16,17) en particulier au bord de la chambre de combustion ainsi qu'un remplissage supplémentaire de graphite (14,19) afin d'améliorer les propriétés d'isolation dans la zone de la bordure, caractérisé en ce que, entre le remplissage de graphite (14,19) et le bord de l'ouverture (13,18) est disposé en plus un anneau métallique profilé (15,20) qui est appliqué contre le bord de l'ouverture du joint par sa surface périphérique extérieure et que la masse de graphite sous forme de poudre, flocons ou fibres est introduite dans l'espace libre annulaire formé par la bordure (2,11,16,17) et le bord de l'ouverture, de facon qu'elle remplisse complètement cet espace libre, et que le remplissage de graphite (14,19) se trouve radialement à l'intérieur du matériau du joint plat, en dessous de la bordure (16,17) de l'espace de combustion.

3. Joint plat selon la revendication 1 ou 2, caractérisé en ce que le remplissage de graphite (3,12,14,19) contient en supplément jusqu'à 50 % en poids de fibres métalliques courtes, de fibres céramiques, de fibres synthétiques organiques, de fibres minérales et/ou de poudre de métal fritté.

4. Joint plat selon une des revendications 2 ou 3, caractérisé en ce que l'anneau métallique (15,20) possède un profil en forme de L ou de U.
